# EUROPÄISCHE PATENTSCHRIFT

(11) **EP 0 823 198 B1**
(45) Veröffentlichungstag und Bekanntmachung des Hinweises auf die Patenterteilung: **13.06.2001**
(21) Anmeldenummer: 97111696.7
(22) Anmeldetag: 10.07.1997
(51) Int. Cl.: A01D 34/30, F16H 23/08

(54) **Taumelgetriebe**
Wobble-plate gearing
Mécanisme à plateau oscillant

(30) Priorität: 08.08.1996 US 693628
(43) Veröffentlichungstag der Anmeldung: 11.02.1998
(73) Patentinhaber: DEERE & COMPANY, Moline, Illinois 61265-8098 (US)
(72) Erfinder: Richardson, Craig Allen, Ottumwa, lowa 52501 (US); Walters, James C., Ottumwa, lowa 52501 (US); Krafka, Jerry Lee, Ottumwa, lowa 52501 (US); Goodmann, Daniel J., Ottumwa, lowa 52501 (US)
(74) Vertreter: Feldmann, Bernhard

(56) Entgegenhaltungen:
- AT-B- 168 183
- CH-A- 403 379
- DE-B- 2 630 973
- GB-A- 702 728
- US-A- 2 835 133
- US-A- 4 735 036

## Beschreibung

Die Erfindung betrifft ein Taumelgetriebe mit einer Antriebswelle, einem auf einem Taumelabschnitt der Antriebswelle drehbar gelagerten Lagergehäuse, einer mit dem Lagergehäuse schwenkbar verbundenen Abtriebsgabel, wobei zwischen dem Lagergehäuse und dem Taumelabschnitt wenigstens ein Lager vorgesehen ist und die Schwenkverbindung des Lagergehäuses mit der Abtriebsgabel über wenigstens einen Bolzen erfolgt.

Taumelgetriebe werden z. B. an Landmaschinen benutzt, um dort eine Rotationsbewegung in eine Oszillationsbewegung umzusetzen. Eine derartige Bewegungsumformung findet z. B. beim Antrieb eines Mähmessers an einem Mähdrescher statt. Ein solches Taumelgetriebe besitzt üblicherweise eine drehend angetriebene Eingangswelle mit einem zu deren Längsachse schräg verlaufenden Abschnitt, auf dem mittels eines Lagers ein Lagergehäuse drehbar und mit dem Abschnitt taumelnd aufgenommen ist. Das Lagergehäuse wird mittels zweier Bolzen schwenkbar in einer Gabel aufgenommen, die mit einer Welle verbunden ist und dieser im Betrieb eine hin- und herschwenkende Bewegung verleiht. Die Bolzen werden mittels Schrauben in den sie aufnehmenden Bohrungen lagegesichert, wozu sie als Senk-, Stift-, Madenschrauben oder in sonstiger Weise ausgebildet sind.

Das der Erfindung zugrunde liegende Problem wird darin gesehen, daß sich solche Schrauben lösen und die Bolzen aus der Verbindung austreten können.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird der bzw. die Bolzen axial formschlüssig gehalten, wobei dieser Formschluß auch während des Betriebs z. B. infolge von Erschütterungen, nicht aufgehoben werden kann.

Eine bevorzugte Form einer formschlüssigen Verbindung besteht darin, daß der Bolzen einen im Durchmesser größeren Abschnitt aufweist, der an einem Absatz, einer Schulter oder dergleichen der ihn aufnehmenden Bohrung zur Anlage kommt. Das Anformen eines Kopfes an ein Ende des Bolzens ist herstellungstechnisch einfach zu realisieren.

Andererseits kann der Bolzen auch mittels eines z. B. federnden Sicherungsrings, der in ihn, in die Bohrung oder ein den Bolzen aufnehmendes Lager einsetzbar ist, axial gesichert werden.

Nach einer weiteren Variante kann die nach außen offene und den Bolzen aufnehmende Bohrung als Stufen- oder gar Sackbohrung ausgebildet werden, so daß der Bolzen von der Wandung der Bohrung selbst von einer Axialbewegung abgehalten wird.

Eine Bewegung des Bolzens nach innen kann auf einfache Weise dadurch verhindert werden, daß das Lager zwischen dem Taumelabschnitt und dem Lagergehäuse, bzw. dessen Außenring als Verschluß für die den Bolzen aufnehmende Bohrung benutzt wird. Hierdurch fallen keine zusätzlichen Teile- oder Herstellungskosten an.

Der im Durchmesser vergrößerte Abschnitt des Bolzens kann problemlos in einem aufgebohrten Abschnitt der den Bolzen aufnehmenden Bohrung untergebracht werden, der z. B. mittels eines Stufenbohrers problemlos herstellbar ist.

Der Zusammenbau des Lagergehäuses mit der Abtriebsgabel gestaltet sich einfach, wenn der Bolzen Abschnitte unterschiedlichen Durchmessers aufweist, wobei bereits ein relativ kleiner Unterschied ausreicht. Ein derartiger Bolzen kann mit dem schlanken Ende zuvor durch die ihn aufnehmende Bohrung geführt und geringfügig in die Bohrung der Abtriebsgabel eingesetzt werden. Auf diese Weise können die zueinander gehörenden Bohrungen aneinander ausgerichtet werden. Sobald die Bohrungen fluchten, kann der Bolzen mit seinem Abschnitt größeren Durchmessers in die Bohrung eingepreßt werden, bis sein Kopf oder seine Schulter anschlägt, während sein Abschnitt kleineren Durchmessers in einem Lager der Abtriebsgabel drehbeweglich aufgenommen wird.

In der Zeichnung ist ein nachfolgend näher beschriebenes Ausführungsbeispiel der Erfindung dargestellt. Es zeigt:
- Fig. 1: ein Taumelgetriebe im Horizontalschnitt und im zusammengebauten Zustand,
- Fig. 2: das Taumelgetriebe aus Figur 1 in Seitenansicht und teilweise demontiert und
- Fig. 3: Abtriebskomponenten des Taumelgetriebes in auseinandergezogener Darstellung.

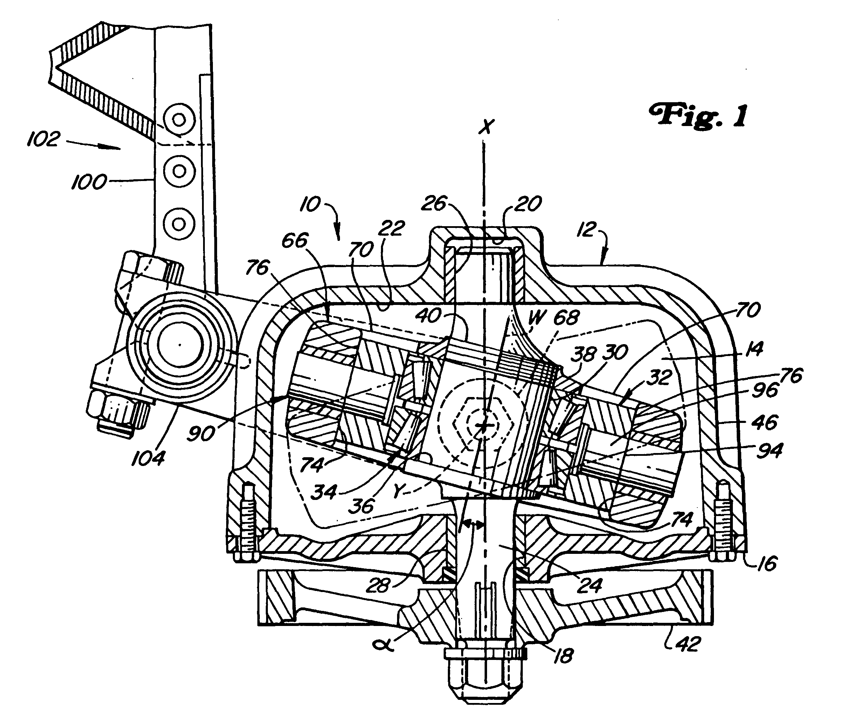

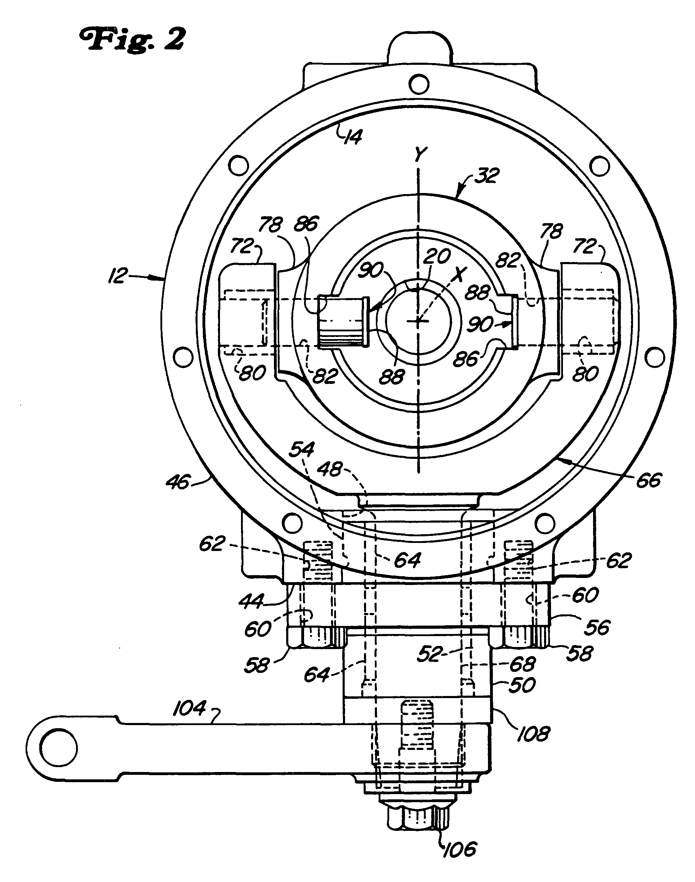

In den Figuren 1 und 2 ist ein Taumelgetriebe 10 gezeigt, das ein flüssigkeitsdichtes Gehäuse 12 enthält, das eine Kammer 14 bildet, zu der man gelangt, indem ein Deckel 16 entfernt wird, der eine der Gehäusewände bildet. Eine Bohrung 18 erstreckt sich durch den Deckel 16, und eine tassenförmige Aussparung 20, die sich in einer Gehäusewand 22 befindet, ist zu der Bohrung 18 entlang einer X-Achse ausgerichtet. Die Gehäusewand 22 befindet sich an der dem Deckel 16 gegenüberliegenden Seite der Kammer 14. Eine Antriebswelle 24 des Taumelgetriebes 10 befindet sich längs der X-Achse und erstreckt sich von der Aussparung 20 in der Gehäusewand 22 durch die Bohrung 18 in dem Deckel 16 quer durch die Kammer 14. Die Antriebswelle 24 ist zur Drehung um die X-Achse in Lagern 26, die sich in der Aussparung 20 befinden, und in Lagern 28 aufgenommen, die sich in der Bohrung 18 befinden. Die Antriebswelle 24 weist einen vergrößerten, mittigen zylindrischen Taumelabschnitt 30 auf, der um eine Taumelachse W gebildet und unter einem Winkel alpha von ca. 14.5 Grad zu der X-Achse ausgerichtet ist.

Ein ringförmiges Lagergehäuse 32 für die Antriebswelle 24 wird mittels eines Satzes von als Kegelrollenlager ausgebildeten Lagern 34 drehbeweglich auf dem Taumelabschnitt 30 der Antriebswelle 24 getragen. Ein Lager 34 liegt an einer Schulter 36 an, die an einem Ende des Taumelabschnitts 30 angeformt ist. Eine Sicherungsmutter 38 wird auf einem Gewindeabschnitt 40 an dem der Schulter 36 gegenüberliegenden Endabschnitt des Taumelabschnitts 30 gehalten und liegt fest an dem anderen Lager 34 an, um den aus dem Lagergehäuse 32 und den Lagern 34 gebildeten Zusammenbau zusammenzuhalten. Auf einem Ende der Antriebswelle 24 ist, z. B. mittels einer Zahnverbindung, eine Zahnscheibe 42 befestigt, die einen Teil eines nicht gezeigten Antriebs zum Einleiten einer Drehbewegung in die Antriebswelle 24 bildet. Wenn diese Zahnscheibe 42 mit einem Taumelgetriebe 10 auf einer gegenüberliegenden Seite eines Erntevorsatzes zum Antrieb eines getrennten, weiteren Messerbalkens zusammenarbeitet, ist herkömmlicherweise ein Zahnriemen in Eingriff mit der Zahnscheibe 42. Es wird daher ersichtlich, daß eine Drehung der Antriebswelle 24 dazu führt, daß sich das Lagergehäuse 32 um eine Y-Achse hin- und herbewegt, die unter einem rechten Winkel zu der X-Achse verläuft.

Aus Figur 2 wird am besten eine ebene Anschlußfläche 44 ersichtlich, die rechtwinklig und quer zu der Y-Achse angeformt ist. Diese Anschlußfläche 44 befindet sich an einer außenliegenden Stelle einer im allgemeinen zylindrischen Wand 46 des Gehäuses 12, wobei sich die im allgemeinen zylindrische Wand 46 zwischen dem Deckel 16 und der Gehäusewand 22 erstreckt. Eine Bohrung 48 erstreckt sich entlang der Y-Achse durch die Wand 46 und weist einen außenliegenden Endbereich auf, der sich mittig innerhalb der Anschlußfläche 44 befindet. Ein im allgemeinen zylindrisches, hülsen- oder rohrförmiges Lagergehäuse 50 enthält eine Lagerbohrung 52, die entlang der Y-Achse 52 verläuft, und einen Endabschnitt 54, der sich in der Bohrung 48 befindet und diese abschließt. Ein Befestigungsflansch 56, der mittels eines Satzes von vier Halteschrauben 58 an der Anschlußfläche 44 befestigt ist, bildet einen integrierten Bestandteil des Lagergehäuses 50. Die Halteschrauben 58 werden jeweils durch einen Satz von vier Löchern 60, die in rechteckiger Form in dem Befestigungsflansch 56 vorgesehen sind, gesteckt und in mit Gewinde versehenen Sackbohrungen 62 Gewinde eingeschraubt, wobei die offenen Endbereiche der Sackbohrungen 62 in die Anschlußfläche **44** münden. Es wird an dieser Stelle darauf hingewiesen, daß die Halteschrauben 58 normalerweise länger sind als dies hier dargestellt ist, und zwar deshalb, weil das Gehäuse 12 an eine nicht gezeigte Gehäusehalteplatte, die einen Teil eines Hauptrahmens eines Erntevorsatzes bildet, angeschraubt wird und diese zwischen den Köpfen der Halteschrauben 58 und dem Befestigungsflansch 56 einklemmt. Ein Paar axial voneinander beabstandeter Lager 64 ist in dem Lagergehäuse 50 aufgenommen.

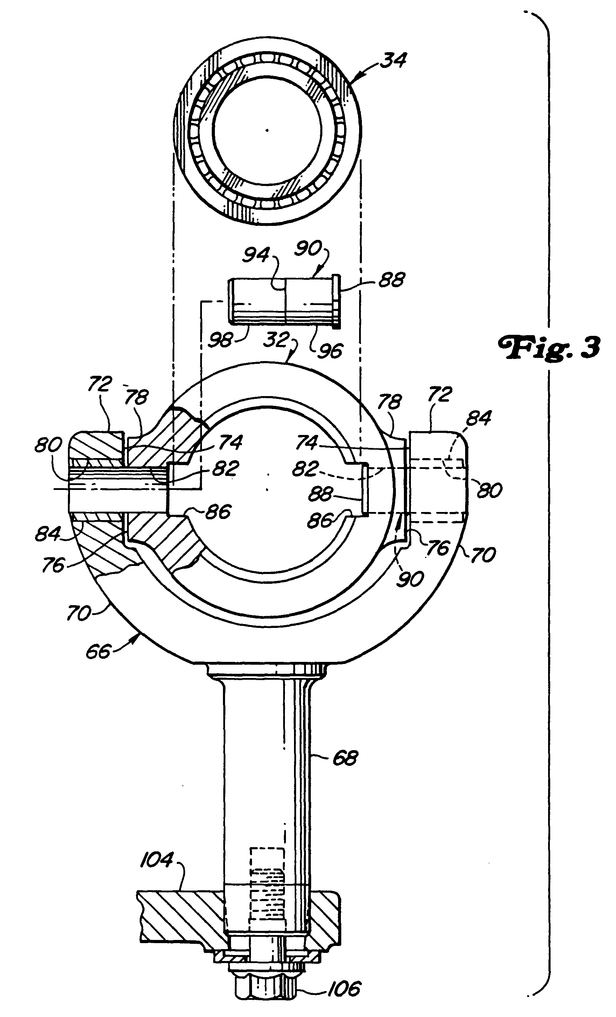

Wie es am besten aus Figur 2 zu entnehmen ist, ist eine Abtriebsgabel 66 zur Übertragung der Oszillationsbewegung, die dem Lagergehäuse 32 aufgegeben wird, nach außerhalb des Gehäuses 12, vorgesehen. Im einzelnen enthält die Abtriebsgabel 66 eine Abtriebswelle 68, die entlang der Y-Achse vorgesehen ist, sich durch das Lagergehäuse 50 erstreckt und in diesem mittels der Lager 64 drehbar aufgenommen ist. In Figur 3 ist zu erkennen, daß die Abtriebsgabel 66 außerdem ein Paar Arme 70 enthält, die an ein Ende der Abtriebswelle 68 angeschlossen sind und jeweils Endbereiche 72 aufweisen, die parallele, radial nach innen weisende, ebene Oberflächen 74 aufweisen. Diese Oberflächen 74 kommen jeweils in Anlage an parallelen, nach außen zeigenden, ebenen Oberflächen 76 von Naben 78, die an diametral gegenüberliegenden Seiten des Lagergehäuses 32 gebildet sind. Die Endbereiche 72 der Abtriebsgabel 66 sind jeweils mit Bohrungen 80 versehen, die sich mit Bezug auf die Y-Achse radial erstrecken und axial zu einem Paar Bohrungen 82 ausgerichtet sind, die sich jeweils in den Naben 78 des Lagergehäuses 32 befinden. Eine Lagerhülse 84 ist in jede der Bohrungen 80 der Arme 70 eingepreßt. Die Lagerhülse 84 kann ein Gleitlager darstellen, wie auch von dem Innenring eines Rollenlagers oder gar dem Innenkreis der Nadeln eines Nadellagers gebildet werden.

Es wird hier bemerkt, daß bis zu dieser Stelle der Beschreibung das beschriebene Taumelgetriebe 10 im wesentlichen einem bekannten Taumelgetriebe entspricht. Die vorliegende Erfindung ist in der Art zu sehen, wie das Lagergehäuse 32 mit der Abtriebsgabel 66 verbunden wird.

Im einzelnen werden die inneren Endbereiche jeder der Bohrungen 82 in den Naben 78 von einem aufgebohrten Abschnitt 86 gebildet, um einen vergrößerten Kopf oder eine Schulter 88 eines als Achse dienenden Bolzens 90 aufzunehmen, der von innen durch jede der Bohrungen 82 und in die danach ausgerichtete Lagerhülse 84 eingesetzt wird. Das Lagergehäuse 32 und die Abtriebsgabel 66 sind somit zusammengebaut, wobei die Schultern 88 die Bolzen 90 davon abhalten, während des Betriebs des Taumelgetriebes 10 nach außen zu wandern.

Wie es am besten in Figur 3 zu sehen ist, ist jeder Bolzen 90 abgestuft, sh. die Stufe 94, um diesen in der Länge in einen Abschnitt größeren und einen Abschnitt kleineren Durchmessers 96 bzw. 98 zu unterteilen. Der Abschnitt größeren Durchmessers 96 ist so bemessen, daß er einen festen Preßsitz mit dem Lagergehäuse 32 eingeht. Die Länge und der Durchmesser des Abschnitts kleineren Durchmessers 98 sind derart gewählt, daß er lose und vonhand durch die Bohrung 82 und eine kleine Strecke in die benachbarte Lagerhülse 84 eingeschoben werden kann - sh. hierzu die Lage des linken Bolzens 90 in Figur 2. Bei diesem Vorgang werden das Lagergehäuse 32 und die Abtriebsgabel 66 ordnungsgemäß zueinander ausgerichtet, so daß die Bolzen 90 maschinell in die Bohrungen 82 eingepreßt werden können. Es wird hier darauf hingewiesen, daß die Lager 34 in das Lagergehäuse 32 eingepreßt werden, sobald die Abtriebsgabel 66 und das Lagergehäuse 32 zusammengebaut sind. Dabei bewirken der oder die Außenringe der Lager 34 einen Verschluß der Bohrung 82, bzw. deren aufgebohrten Abschnitt 86, um so den Bolzen 90 davon abzuhalten, aus der Bohrung 82 radial nach innen zu wandern.

Wenn die Abtriebsgabel 66 mit dem Lagergehäuse 32 verbunden und das Lagergehäuse 32 auf den Taumelabschnitt 30 der Antriebswelle 24 montiert ist, bewirkt eine Drehung der Antriebswelle 24 eine Oszillation, d. h. ein Hin- und Herschwenken der Abtriebswelle 68. Zum Bewirken einer hin- und hergehenden Bewegung eines Messerbalkens 102 als Reaktion auf die Oszillation der Abtriebswelle 68 ist zwischen ein Ende der Abtriebswelle 68 und einen Anschlußkopf 100 des Messerbalkens 102 ein Schwenkarm 104 eingefügt. Im einzelnen wird ein Endbereich des Schwenkarms 104 auf einen konischen, gezahnten Endabschnitt der Abtriebswelle 68 mittels einer Schraube 106 aufgezogen, wobei die Schraube 106 in einer Gewindebohrung entlang der Längsachse der Abtriebswelle 68 aufgenommen ist. Ein Filzring 108 ist zwischen dem Schwenkarm 104 und dem Lagergehäuse 50 eingeschlossen und dient dazu, das Eindringen von Schmutz in das Lagergehäuse 50 auszuschließen.

Es wird davon ausgegangen, daß die Funktion des Taumelgetriebes 10 aus der vorhergehenden Beschreibung ausreichend klar ist. Es erübrigt sich, darauf hinzuweisen, daß die mit der Schulter 88 versehenen Bolzen 90, die zum Herstellen einer Verbindung zwischen dem Lagergehäuse 32 und der Abtriebsgabel 66 von innen nach außen eingesetzt werden, eine zuverlässige Verbindung gewährleisten, da die Schultern 88 und die Außenringe der Lager 34 die Bolzen 90 an Ort und Stelle halten. Außerdem macht es die abgestufte Bauweise der Bolzen 90 möglich, die Bolzen 90 vonhand durch die Bohrungen 82 hindurch und weit genug in die Lagerhülsen 84 einzuschieben, um das Lagergehäuse 32 und die Abtriebsgabel 88 korrekt zueinander auszurichten, so daß die Bolzen 90 maschinell in die Bohrungen 82 eingedrückt werden können.

## Patentansprüche

1. Taumelgetriebe (10) mit einer Antriebswelle (24), einem auf einem Taumelabschnitt (30) der Antriebswelle (24) drehbar gelagerten Lagergehäuse (32), einer mit dem Lagergehäuse (32) schwenkbar verbundenen Abtriebsgabel (66), wobei zwischen dem Lagergehäuse (32) und dem Taumelabschnitt (30) wenigstens ein Lager (34) vorgesehen ist und die Schwenkverbindung des Lagergehäuses (32) mit der Abtriebsgabel (66) über wenigstens einen Bolzen (90) erfolgt, dadurch gekennzeichnet, daß der Bolzen (90), eine ihn in der Abtriebsgabel (66) aufnehmende Lagerhülse (84) oder eine die Lagerhülse (84) aufnehmende Bohrung (80) einen radialen Vorsprung aufweist, der der axialen Anlage des Bolzens (90) dient.

2. Taumelgetriebe nach Anspruch 1, dadurch gekennzeichnet, daß der Bolzen (90) eine Schulter (88) oder einen gegenüber dem übrigen Bolzen (90) vergrößerten Kopf aufweist.

3. Taumelgetriebe nach Anspruch 1, dadurch gekennzeichnet, daß der Bolzen (90), die Lagerhülse (84) oder die Bohrung (80) einen sich radial erstreckenden Sicherungsring aufnehmen.

4. Taumelgetriebe nach Anspruch 1, dadurch gekennzeichnet, daß die Bohrung (80) als Sackbohrung oder als Durchgangsbohrung mit einer Schulter ausgebildet ist.

5. Taumelgetriebe nach einem oder mehreren der vorherigen Ansprüche, dadurch gekennzeichnet, daß eine den Bolzen (90) in dem Lagergehäuse (32) aufnehmende Bohrung 82 einen aufgebohrten Abschnitt (86) zur Aufnahme der Schulter oder des Kopfes des Bolzens (90) aufweist.

6. Taumelgetriebe nach einem oder mehreren der vorherigen Ansprüche, dadurch gekennzeichnet, daß das Lager (34) einen Außenring aufweist und so in das Lagergehäuse (32) einsetzbar ist, daß dieser im eingesetzten Zustand den aufgebohrten Abschnitt (86) überdeckt.

7. Taumelgetriebe nach einem oder mehreren der vorherigen Ansprüche, dadurch gekennzeichnet, daß der Bolzen (90) einen Abschnitt größeren und einen Abschnitt kleineren Durchmessers (96 und 98) aufweist, von denen der Abschnitt größeren Durchmessers (96) kürzer ausgebildet und so bemessen ist, daß er einen Preßsitz in einer ihn aufnehmenden Bohrung (82) des Lagergehäuses (32) bildet, während der Abschnitt kleineren Durchmessers (98) länger ausgebildet und im Querschnitt so bemessen ist, daß er lose durch die Bohrung (82) geführt und in der Lagerhülse (84) in der Abtriebsgabel (66) beweglich gelagert werden kann.

## Claims

1. A wobble drive (10) with a drive shaft (24), a bearing housing (32) mounted rotatably on a wobble section (30) of the drive shaft (24), a driven fork (66) pivotally connected to the bearing housing (32), wherein at least one bearing (34) is provided between the bearing housing (32) and the wobble section (30) and the pivotal connection of the bearing housing (32) to the driven fork (66) is effected through at least one pin (90), characterized in that the pin (90), a bearing sleeve (84) receiving it in the driven fork (66) or a bore (80) receiving the bearing sleeve (84) has a radial ledge which serves as the axial abutment for the pin (90).

2. A wobble drive according to claim 1, characterized in that the pin (90) has a shoulder (88) or a head enlarged relative to the rest of the pin (90).

3. A wobble drive according to claim 1, characterized in that the pin (90), the bearing sleeve (84) or the bore (80) receives a radially extending retaining ring.

4. A wobble drive according to claim 1, characterized in that the bore (80) is in the form of a blind bore or a through bore with a shoulder.

5. A wobble drive according to one or more of the preceding claims, characterized in that a bore (82) receiving the pin (90) in the bearing housing (32) has a counterbored section (86) for receiving the shoulder or the head of the pin (90).

6. A wobble drive according to one or more of the preceding claims, characterized in that the bearing (34) comprises an outer ring and can be so inserted in the bearing housing (32) that this covers the counterbored section (86) in the inserted state.

7. A wobble drive according to one or more of the preceding claims, characterized in that the pin (90) comprises a section of greater diameter (96) and a section of smaller diameter (98), of which the section of greater diameter (96) is made shorter and is so dimensioned that it forms a press fit in a bore (82) of the bearing housing (32) receiving it, while the section of smaller diameter (98) is made longer and is so dimensioned in cross-section that it is guided loose through the bore (82) and can be fitted movably in the bearing sleeve (84) in the driven fork (66).

## Revendications

1. Mécanisme oscillant (10) comportant un arbre d'entraînement (24), un logement de paliers (32), qui est monté de manière à pouvoir tourner sur une section oscillante (30) de l'arbre d'entraînement (24) et une fourche menée (66) reliée de manière à pouvoir pivoter au logement de paliers (32), et dans lequel au moins un palier (34) est prévu entre le logement de paliers (32) et la section oscillante (30), et la liaison pivotante du logement de paliers (32) avec la fourche menée (66) est réalisée par l'intermédiaire d'au moins un goujon (90), caractérisé en ce que le goujon (90), un coussinet de palier (84), qui reçoit le goujon dans la fourche menée (66), ou un perçage (80), qui loge le coussinet de palier (84), possède une partie saillante radiale, qui est utilisée pour l'application axiale du goujon (90).

2. Mécanisme oscillant selon la revendication 1, caractérisé en ce que le goujon (90) possède un épaulement (88) ou une tête élargie par rapport au reste du goujon (90).

3. Mécanisme oscillant selon la revendication 1, caractérisé en ce que le goujon (90), le coussinet de palier (84) ou le perçage (80) possède une bague de sécurité qui s'étend radialement.

4. Mécanisme oscillant selon la revendication 1, caractérisé en ce que le perçage (80) est agencé sous la forme d'un perçage borgne ou d'un perçage traversant pourvu d'un épaulement.

5. Mécanisme oscillant selon une ou plusieurs des revendications précédentes, caractérisé en ce qu'un perçage (82) qui loge le goujon (90) dans le logement de paliers (32), possède une section alésée (86) destinée à loger l'épaulement ou la tête du goujon (90).

6. Mécanisme oscillant selon une ou plusieurs des revendications précédentes, caractérisé en ce que palier (34) possède une bague extérieure et peut être inséré dans le logement de paliers (32) de telle sorte qu'à l'état inséré, ce dernier recouvre la section alésée (86).

7. Mécanisme oscillant selon une ou plusieurs des revendications précédentes, caractérisé en ce que le goujon (90) possède une section de diamètre accru et une section de diamètre réduit (96 et 98) parmi lesquelles la section de diamètre accru (96) est plus courte et est dimensionnée de telle sorte qu'elle établit une liaison à ajustement serré dans un perçage (82), qui la reçoit, du logement de paliers (32), tandis que la section de diamètre réduit (98) est plus longue et est dimensionnée en coupe transversale de telle sorte qu'elle est guidée de façon lâche dans le perçage (82) et peut être montée avec possibilité de déplacement dans le coussinet de palier (84) situé dans la fourche menée (66).
